# EUROPÄISCHE PATENTSCHRIFT

(11) **EP 0 683 118 B1**
(45) Veröffentlichungstag und Bekanntmachung des Hinweises auf die Patenterteilung: **18.08.1999**
(21) Anmeldenummer: 95107388.1
(22) Anmeldetag: 16.05.1995
(51) Int. Cl.: B65G 17/12

(54) **Anordnung zum Speichern und Fördern von Gegenständen, insbesondere von Lagerbehältern**
Storage device for article especially storage containers
Dispositif de stockage d'objets, en particulier des récipients de stockage

(30) Priorität: 19.05.1994 CH 155094
(43) Veröffentlichungstag der Anmeldung: 22.11.1995
(73) Patentinhaber: Hoegger, Cornel, CH-9230 Flawil (CH)
(72) Erfinder: Hoegger, Cornel, CH-9230 Flawil (CH)
(74) Vertreter: Frei, Alexandra Sarah

(56) Entgegenhaltungen:
- EP-A- 0 514 802
- WO-A-89/05771
- DE-A- 4 003 490
- US-A- 4 346 803

## Beschreibung

Die vorliegende Erfindung betrifft eine Anordnung zum umlaufenden Transportieren von einander folgenden Lagerbehältern gemäss den Ansprüchen.

Derartige Anordnungen sind bekannt. Zum Beispiel zeigt die US 3,243,032 eine mehrschichtige Transportanordnung. Zwei parallele Transportketten besitzen in durch Lagerbehälter bestimmten Abständen halbzylindrische hohle Stifte in denen Zapfen von den Transportbehältern ruhen und die dadurch mitgenommen werden. An den Umlenkstellen von einer Ebene in die nächst höhere Ebene befinden sich Paare von Transportzahnrädern. Der Antrieb derselben erfolgt durch die Transportkette und zwar wird das eine von der Kette der unteren und der oberen Kette angetrieben, während das zugeordnete Rad infolge eines Anschnittes nur zeitweilig in Eingriff steht. Der Anschnitt ist so angeordnet, dass der erste Transportzapfen nicht in Eingriff kommen kann, jedoch der zugehörige nachfolgende Transportzapfen. Nachteilig an einer solchen Anordnung ist, dass die Transportbehälter an der Kette aufgehängt sind, so dass die Transportkette gespannt werden muss, wobei die Gefahr besteht, dass Transportbehälter in benachbarten Ebenen infolge unachtsamer Beladung kollidieren können und dadurch die Kette verspannt werden könnte, was sich dann nicht ohne weiteres durch Nachspannen ausgleichen lässt, sondern sogar zum Auswechseln der Kette fuhren könnte.

In der JP-A-58 047 711 gemäss Patent Abstract of Japan, Band 007, No 128 (M-220) soll dieser Nachteil behoben werden, indem die Transportbehälter mit Rollen versehen sind, mit denen sie auf einer Rollschiene laufen. Die Antriebskette ist als Rollenkette mit lose auf den Hülsen drehbaren Rollen ausgebildet, welche Rollen auf einer zweiten, ausserhalb der Transportschiene angeordneten Kettenschiene aufliegen und so die Kette tragen. Es ist bekannt, dass solche Rollenketten schwer und teuer sind, und dass nicht gewährleistet ist, dass zwischen der Kette und der Schiene eine Rollreibung besteht, weil bei Temperaturunterschieden, wie sie z.B. in Autoklaven vorkommen, die Rollen auf den Achsen festsitzen können, so dass eine Gleitreibung mit höherem Kraftverbrauch stattfindet. Wenn dies einmal vorkommt, so werden die Rollen der Kette dauernd gleiten und nicht mehr rollen weil sie angeschliffen werden können. Zudem führen die doppelten Schienen beidseits der Lagerbehälter zu höherem Gewicht der Anlage und verteuert diese noch zusätzlich.

Die Schrift WO-A-89 05771 betrifft die Personenförderung auf einer oberen Ebene und die Rückführung des Transportmittels über eine zur oberen Ebene parallelen unteren Ebene. Rotierende Elemente, die synchron mit Zahnrädern laufen, die die verschiedenen Ketten tragen, bewegen die Platten des Transportmittels von oberer zu unterer Ebene.

Die Schrift EP-A-0 514 802 befasst sich mit einem Transportmittel in einem Autoclaven, in dem Tablare in Antriebsketten gehaltert und über verschiedene Ebenen sowohl hinauf als auch hinunter transportiert werden. Diese Tablare sind mit Löchern versehen, in welche Bolzen der parallelen Antriebsketten hineinragen und sie auf diese Weise transportieren.

Die Schrift DE-A-4 003 490 befasst sich mit auf Rollen getragenen Paletten eines Förderbands einer automatisierten Montagestrasse. Die zu bearbeitenden Werkstücke werden auf diese Paletten montiert und mit höchster Präzision ohne Spiel transportiert. Die Paletten weisen Klemmvorrichtungen auf, die eine Verbindung zu einem angetriebenen Zahnriemen herstellen. Beim Übergang von einer oberen zur nächsten unteren Ebene wird eine vordere Führungsrolle über eine Kurvenscheibe zur Stabilisierung geführt und der Mitnehmerzapfen der Klemmvorrichtung in einem Zahnriemenrad in einer Aussparung formschlüssig mitgenommen.

Es ist nun Aufgabe der Erfindung, ein Transport- und Lagersystem über mindestens vier Ebenen zu schaffen, das nicht nur sehr betriebssicher gebaut ist, sondern auch in der Lage ist, grosse Gewichte aufzunehmen, welche z.B. bei der Behandlung von Konservendosen und Glasern bis zu mehreren Tonnen betragen können und zudem bei extremen Temperaturen, wie sie bei der Sterilisierung auftreten, immer betriebssicher bleiben. Dabei können die Behandlungen zudem unter Druck und mehrfachem Medieneinfluss, wie Dampf, Wasser, Stickstoff usw. erfolgen, und dies in abgeschlossenen Systemen, was die absolute Betriebssicherheit verlangt.

Erfindungsgemäss wird dies durch eine Anordnung erreicht, die durch die Merkmale im kennzeichnenden Teil des Anspruchs 1 bestimmt sind, nämlich derart, dass beidseits der Lagerbehälter Tragrollen und Führungsrollen vorhanden sind, die beidseits auf einer gemeinsamen Schiene in jeder Ebene laufen. Lagerbehälter sind über Führungsrollen mit der Antriebskette verbunden. Die Führungsrollen und die Tragrollen sind zur Antriebskette derart versetzt angeordnet, dass sich die Antriebskette entweder ausserhalb oder innerhalb der Tragrollen befindet.

Nachfolgend wird ein Beispiel der Erfindung an Hand der Zeichnung beschrieben. Es zeigen:
- Fig.1: Eine Seitenansicht einer vertikalen Hebeanordnung zwischen zwei benachbarten Ebenen und einer durch Schnitte verkleinert gezeichneten Parallelrückführung in einer Anordnung zum Lagern und Transportieren von Lagerbehältern nach der Erfindung,
- Fig.2: einen Grundriss der Anordnung nach Fig.1 mit der Rückführung, der Hebeanordnung und einem Teil eines horizontalen Verschiebeweges, und
- Fig.3: eine Seitenansicht einer zweiten Rückführungsanordnung, mit Kippung des Lagerbehälters zu dessen Entleerung und Austrag des Produktes, ferner mit einer Beladebühne zur Beschickung der Lagerbehälter.

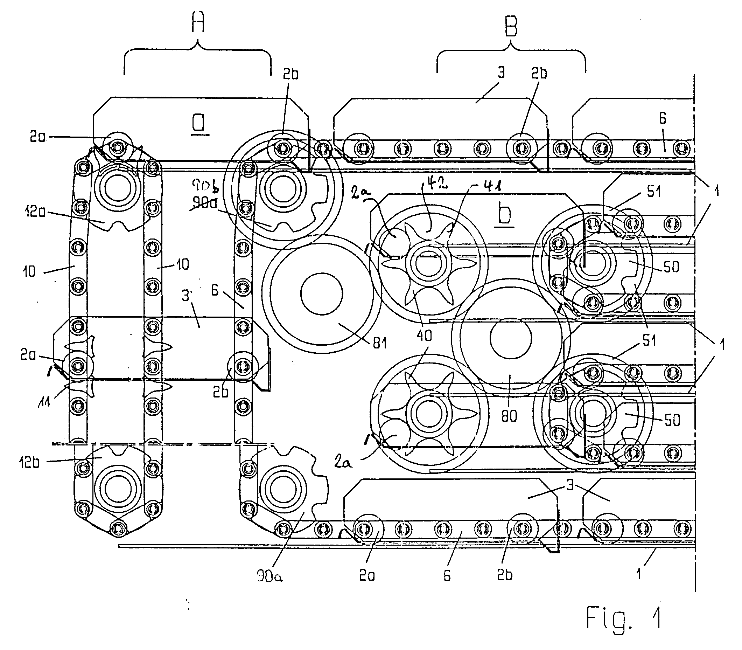

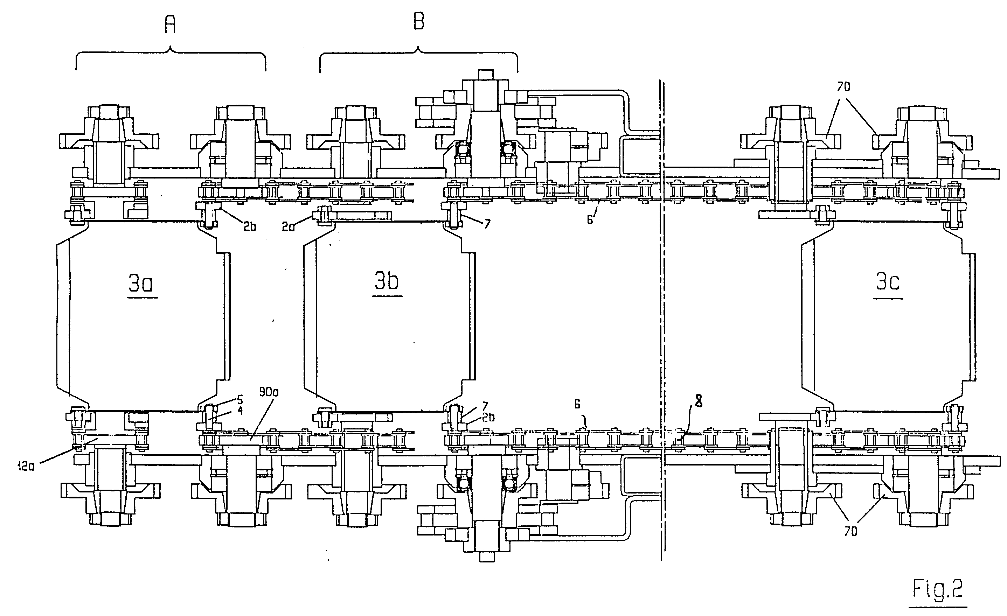

In Fig.1 sind die Schienen 1 zu erkennen, auf denen Führungsrollen 2b, die seitlich an den Lagerbehältern 3 angebracht sind, laufen. Diese sind freilaufend auf Stiften 4 gehaltert. Die Lagerbehälter 3 sind an ihren Seiten beispielsweise mittig mit je einem Bolzen versehen, welche Bolzen drehbar in Hülsen der Antriebsketten 6 eingreifen und durch diese Antriebsketten bewegt werden. Wie Fig.2 zeigt, können die Antriebsketten 6 beidseits der Lagerbehälter 3 auch am Stift 4 in der jeweiligen Führungsrolle 2b gehaltert sein, zudem sind auch die vorderen Rollen 2a freilaufend. Darauf begründet sich auch der unterschiedliche Abstand der Rollen 2a, 2b von der Seitenwand des Lagerbehälters 3. Die Befestigung der beiden Rollen 2a,2b am Lagerbehälter 3 ist im übrigen identisch mit je einem Stift 4.

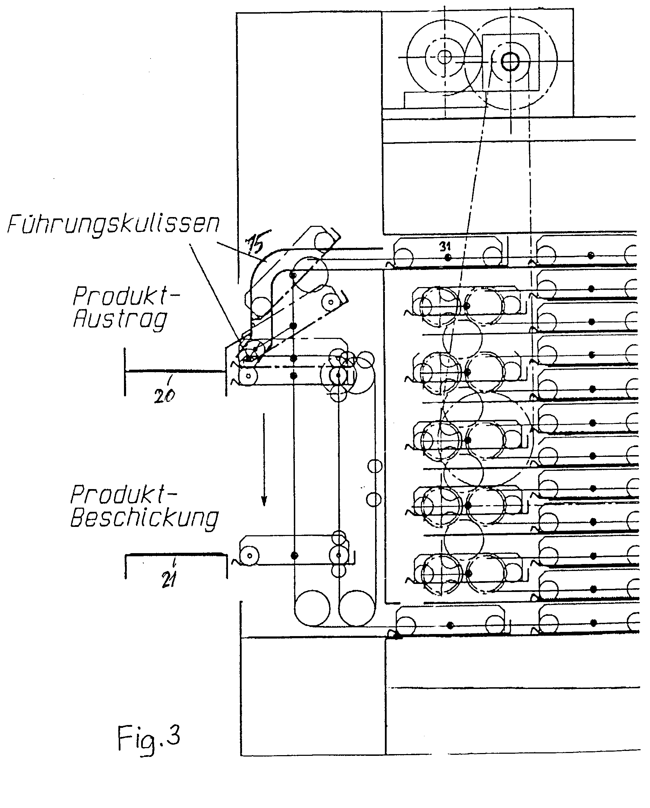

Wie aus Fig.3 ersichtlich ist, sind im Gegensatz zu der Anordnung in den Fig. 1 und 2 Stifte 4 an den Lagerbehältern angebracht, die in Hülsen der Kettenglieder lösbar eingsetzt sind. Durch eine solche Anordnung kann der Entladevorgang stark vereinfacht werden, indem die Rollen 2a in der obersten Transportebene und an deren Ende in eine Führungskulisse 15 einläuft, während die Führungsrollen 2b noch in einem horizontalen Abschnitt verbleiben. Die Halterung der Lagerbehälter 3 an der Transportkette 6 bewirkt, wenn dieser Punkt über das obere Kettenumlenkrad 90a läuft, eine Kippung des Lagerbehälters 3, so dass dessen Ladung von allein auf einen Träger 20 gleiten kann.

Nach dieser Schrägstellung führt die Kulisse 15 den Lagerbehälter 3 wieder in die horizontale Lage zurück, wodurch dieser, der einerseits durch Bolzen 31 und Transportkette 6 und andererseits mit der Führungskette 10, die innerhalb des absteigenden Weges der Transportkette 6 angeordnet ist und mit Taschen 11 versehen ist, in horizontaler Ausrichtung parallel nach unten geführt wird. Die Beladung kann dann irgendwo auf diesem Wegabschnitt erfolgen, und die zu behandelnden Produkte können dann einfach mittels Stössern, die hier nicht dargestellt sind, auf die Lagerbehälter 3 geschoben werden.

Fig.2 zeigt drei Lagerbehälter 3a, 3b, 3c in zwei Umlenkungen B,C bzw. in der Rückführung A: Ein Lagerbehälter 3a befindet sich im Abschnitt A in der oberen Rückführungslage bei der obersten Schiene 1 und ein Lagerbehälter 3a, gemäss der Darstellung links in Fig.1. Der mittig gezeichnete Lagerbehälter 3b zeigt die Lage im Abschnitt B in Fig. 1 bei einer Hebeanordnung.

In Fig.1 sind die für eine garantiert parallele Verschiebung der Lagerbehälter beim Anlieben oder Absenken von einer Ebene zur benachbarten Ebene notwendigen Kettenräder 50 und Umlenkräder 40 in den Umlenkanordnungen der Hebeanordnungen dargestellt. Die Kettenräder 50 besitzen Ausnehmungen 51 zwischen Führungszähnen 52 für die Aufnahme der Kettenbolzen 8. Dadurch, dass die Antriebskette 6 am Lagerbehälter 3 aufgehängt ist, kann diese nicht auf der Schiene 1 schleifen, und die Antriebskette 6 bewegt sich seitlich neben den Rollen 2a und Führungsrollen 2b konfliktlos.

Dies hat natürlich auch einen Einfluss auf die Gestaltung der Umlenkräder 40, die in ähnlichem Aufbau wie die Kettenumlenkräder 50 auch, Ausnehmungen 42 zwischen Zähnen 41 aufweisen, wobei aber die Grösse der Ausnehmungen 42 dem beispielweisen Durchmesser der Rollen 2a zu entsprechen hat, um diesen beim Vertikaltransport in den Hebeanordnungen einen einwandfreien Sitz zu geben.

Wie in Fig.1 und 2 ersichtlich ist, sind alle Kettenräder 50 und die Umlenkräder 40 je drehstarr zueinander ausserhalb des Transportweges der Lagerbehälter 3 durch angeordneten Zahnrädern 70 verbunden. Diese Zahnräder 70 kämmen mit Zwischenzahnrädern 80 wodurch alle Hebeanordnungen synchron drehen.

Mit diesen Hebeanordnungen werden die Lagerbehälter 3 beispielsweise von einer obersten Ebene stufenweise von einer Ebene zur andern zu einer untersten Ebene transportiert. Die Schienen 1 sind dabei nur zwischen zwei Hebeanordnungen jeweils für eine Ebene vorhanden und dienen der Unterstützung der Antriebsrollen 2b und der Rollen 2a. Die Kette 6 zum Antrieb der Lagerbehälter 3 ist beispielsweise an den Stiften 4, die in Hülsen der Kettenbolzen 8 eingreifen, aufgehängt, und bewirkt mit ihrer translatorischen Bewegung die Verschiebung der Lagerbehälter, ohne auf den Schienen 2 aufzuliegen und mitzurollen. Die dazu verwendete Kette ist also nur auf eine Zugbeanspruchung auszulegen, aber keinesfalls für ein Rollen auf Schienen.

Für die Rückführung der Lagerbehälter 3 von der untersten Ebene in die oberste Ebene ist eine Rückführungsanordnung vorhanden. Diese besteht, wie Fig.1 zeigt, aus zwei Kettenumlenkrädern 90, von denen das eine Kettenumlenkrad 90b über der obersten Schiene 1 und das andere Kettenumlenkrad 90a auf der Höhe der untersten Schiene 1 angeordnet sind. Von diesen Kettenumlenkrädern 90a, 90b ist das eine, z.B. das Kettenumlenkrad 90b mit einem Übertragungsmechanismus 81 mit einem Zahnrad 70 der Hebeanordnung im Eingriff. Es ist nicht notwendig, dass sowohl das untere Kettenumlenkrad 90a als auch das obere Kettenumlenkrad 90b von den Hebeanordnungen angetrieben ist, da die Kette 6 selbst den notwendigen Synchronismus zwischen den beiden Kettenumlenkrädern 90a,90b bewirkt.

Für die stabile parallele Verschiebung der Lagerbehälter ist noch eine zweite vertikale Transportanordnung notwendig. Diese besteht im wesentlichen aus einer Führungskette 10, bei der zwischen den Bolzen Führungskulissen 11 angeordnet sind. Diesen kommt die Aufgabe zu, die Rollen 2a der Transportbehälter 3 zu fangen und in vertikaler Richtung zu transportieren. Diese Führungskette 10 ist oben und unten um je ein Führungskettenrad 12a,12b geführt. Eines dieser Führungskettenräder 12a, 12b ist mittels einer Steuerkette, die nicht eingezeichnet ist, mit einem entsprechenden Kettenumlenkrad 90a,90b verbunden. Damit ist gewährleistet, dass auch diese Führungskette 10 synchron mit der Antriebskette 6 bewegt wird, wodurch eine absolute Parallelität zwischen den Ketten, in der Rückführung und in den Hebeanordnungen sicher gewährleistet ist.

Wenn in der vorangehenden Beschreibung die Rückführung von unten nach oben und die Umlenkung von einer Ebene zur benachbarten Ebene von oben nach unten dargestellt wurde, bedeutet dies selbstverständlicherweise, dass ebensogut in umgekehrter Richtung gearbeitet werden kann. Die Hebeanordnungen würden dann die Lagerbehälter 3 stufenweise von oben nach unten und die Rückführung von unten nach oben transportieren.

Der Antrieb 13 für die Antriebsketten kann, wie in Fig 2 gezeigt, an einer Stelle bei den Hebeanordnungen angeordnet sein, um von dort her sämtliche Kettenräder über die genannten Zwischenräder anzutreiben.

Wenn in der vorangehenden Beschreibung und der Zeichnungen eine Anordnung mit Rollen beschrieben und dargestellt ist, wäre auch denkbar, dass anstelle der Rollen Gleiter verwendet wurden, die dann auf den Schienen gleiten.

Anstelle einer Steuerkette, wie oben beschrieben, wäre auch denkbar, die synchrone Drehbewegung zwischen Führungskettenräder 12a,12b und Kettenumlenkräder 90a,90b mit einer Zahnradverbindung zwischen den Kettenrädern zu bewerkstelligen.

Wenn im beschriebenen Ausführungsbeispiel jeweils die Zapfen 4 der Stifte, auf denen die Führungsrollen 2b gelagert sind, zur Verbindung mit der Antriebskette dienen, liesse sich auch der umgekehrte Fall denken, bei dem Zapfen in die Hülsen der Antriebskette 6 eingesetzt sind, die dann in Hohlachsen der Antriebsrollen 2b eingreifen würden.

## Patentansprüche

1. Anordnung zum umlaufenden Transportieren von einander folgenden Lagerbehältern (3) auf einem in sich geschlossenen Umlaufweg über eine Mehrzahl von übereinandergeordneten parallelen Ebenen mit horizontalen Verschiebewegen und vertikal transportierenden Hebeanordnungen zwischen benachbarten Ebenen und wenigstens einer Rückführung zwischen oberster und unterster Ebene,
mit Schienen (1), auf denen beidseits der Lagerbehälter (3) angeordnete Rollen oder Gleiter laufen und teilweise mit Antriebsketten, die über Kettenumlenkräder geführt sind, verbunden sind, die die Lagerbehälter (3) entlang dem Umlaufweg fortbewegen,
dadurch gekennzeichnet,
dass Behälter (3) über Bolzen drehbar mit einer Antriebskette (6) verbunden sind und durch diese angetrieben laufen,
dass Rollen (2a) von der Antriebskette (6) beabstandet sind und frei laufen,
dass Behälter (3) auf einem inneren Umlaufweg von einer untersten Ebene ebenenweise über mindestens vier nächst benachbarte Ebenen hochlaufen und sie auf einem äusseren Umlautweg von der obersten zur untersten Ebene rücklaufen,
dass als Hebeanordnungen der Behälter (3) zwischen nächst benachbarten Ebenen Kettenumlenkräder (50) zum Umführen der Antriebskette (6) vorgesehen sind und Umlenkräder (40) zum Eingreifen der Rollen (2a) vorgesehen sind und
dass zur Rückführung der Behälter (3) zwischen oberster und unterster Ebene weitere Kettenumlenkräder (90) zum Umlenken der Antriebskette (6) sowie weitere Kettenumlenkräder (12) zum Umlenken einer Vertikalkette (10) vorgesehen sind, in welche Vertikalkette (10) die Rollen (2a) eingreifen vorgesehen sind,
derart, dass die Kettenumlenkräder (12,50,90) für die Antriebskette (6) sowie Vertikalkette (10) und für die Umlenkräder (40) drehsynchron miteinander verbunden sind.

2. Anordnung nach Anspruch 1, **dadurch gekennzeichnet**, dass die Lagerbehälter (3) mit der Antriebskette (6) über Führungsrollen (2b) mit einem Kleineren Abstand zur Antriebskette (6) mit dieser verbunden sind, während die Rollen (2a) einen grösseren Abstand zur Kette aufweisen.

3. Anordnung nach Anspruch 2, **dadurch gekennzeichnet**, dass die Führungsrollen (2b) der Lagerbehälter (3) im Bereich der hinteren Ecken der Lagerbehälter (3) über Stifte (4) angebracht sind, welche mit der Antriebskette (6) verbunden sind.

4. Anordnung nach Anspruch 2, **dadurch gekennzeichnet**, dass die Führungsrollen (2b) der Lagerbehälter (3) an ihren Seiten im wesentlichen mittig über Stifte (4) angebracht sind, welche mit der Antriebskette (6) verbunden sind.

## Claims

1. Arrangement for the circulating transportation of successive storage containers (3) on an inherently closed circulating path over a plurality of parallel planes which are arranged one above another and have horizontal displacement paths and vertically transporting lifting arrangements between adjacent planes, and at least one return feed between the uppermost and lowermost plane, having rails (1) on which rollers or sliding means, which are arranged on both sides of the storage containers (3), run and some of which rollers or sliding means are connected to driving chains which are guided via chain-deflecting wheels and advance the storage containers (3) along the circulating path, characterized in that containers (3) are rotatably connected to a driving chain (6) via bolts and move by being driven by said driving chain, in that rollers (2a) are at a distance from the driving chain (6) and run freely, in that containers (3) advance upwards on an inner circulating path plane-by-plane from a lowermost plane over at least four contiguous planes and on an outer circulating path return from the uppermost to the lowermost plane, in that as lifting arrangements of the containers (3) between contiguous planes chain-deflecting wheels (50) are provided to return the driving chain (6) and deflecting wheels (40) are provided to engage the rollers (2a), and in that for the return feed of the containers (3) between she uppermost and lowermost plane further chain-deflecting wheels (90) are provided to deflect the driving chain (6) and further chain-deflecting wheels (12) are also provided to deflect a vertical chain (10) in which the rollers (2a) engage, said further wheels being provided in such a manner that the chain-deflecting wheels (12, 50, 90) for the driving chain (6) and vertical chain (10) and for the deflecting wheels (40) are connected to one another in a rotationally synchronous manner.

2. Arrangement according to Claim 1, characterized in that the storage containers (3) are connected to the driving chain (6) via guide rollers (2b) which are at a small distance from the driving chain (6) whereas the rollers (2a) are at a larger distance from the chain.

3. Arrangement according to Claim 2, characterized in that the guide rollers (2b) of the storage containers (3) are attached in the region of the rear corners of the storage containers (3) via pins (4) which are connected to the driving chain (6).

4. Arrangement according to Claim 2, characterized in that the guide rollers (2b) of the storage containers (3) are attached on their sides essentially centrally via pins (4) which are connected to the driving chain (6).

## Revendications

1. Disposition pour le transport en continu de contenants de stockage (3) consécutifs sur un trajet de circulation fermé passant par une pluralité de niveaux parallèles superposés avec des trajets de translation horizontaux et des dispositifs de levage réalisant un transport vertical entre des niveaux voisins et au moins un retour entre le niveau supérieur et le niveau inférieur, comportant des rails (1) sur lesquels circulent des galets ou des coulisses disposés de part et d'autre des contenants de stockage (3) et parfois reliés avec des chaînes d'entraînement guidées sur des roues de renvoi de chaîne qui déplacent les contenants de stockage (3) le long du trajet de circulation, caractérisée en ce que les contenants (3) sont reliés à une chaîne d'entraînement (6) par des boulons avec possibilité de rotation et entraînés par celle-ci, en ce que des galets (2a) sont écartés de la chaîne d'entraînement (6) et tournent librement, en ce que les contenants (3) montent d'un niveau inférieur en passant par quatre plans voisins successifs sur leur trajet de circulation et reviennent du niveau supérieur au niveau inférieur sur un trajet de circulation extérieur, en ce que les dispositifs de levage des contenants (3) entre des niveaux successifs voisins comprennent des roues de renvoi de chaîne (50) destinées à dévier la chaîne d'entraînement (6) et des roues de renvoi (40) se mettant en prise avec les galets (2a), et en ce qu'il est prévu en vue du renvoi des contenants (3) entre les niveaux supérieur et inférieur d'autres roues de renvoi de chaîne (90) destinées a dévier la chaîne d'entraînement (6) ainsi que d'autres roues de renvoi de chaîne (12) destinées à dévier une chaîne verticale (10) dans laquelle les galets (2a) se mettent en prise, de telle sorte que les roues de renvoi de chaîne (12, 50, 90) destinées à la chaîne d'entraînement (6) et à la chaîne verticale (10) ainsi qu'aux roues de renvoi (40) soient reliées entre elles de manière à obtenir une rotation synchrone.

2. Disposition selon la revendication 1, caractérisée en ce que les contenants de stockage (3) sont reliés avec la chaîne d'entraînement (6) par des galets de guidage (2b) à une plus faible distance de la chaîne d'entraînement (6), tandis que les galets (2a) présentent une grande distance par rapport à la chaîne.

3. Disposition selon la revendication 2, caractérisée en ce que les galets de guidage (2b) des contenants de stockage (3) sont disposés au niveau des coins postérieurs du contenant de stockage (3) sur des goujons (4), lesquels sont reliés avec la chaîne d'entraînement (6).

4. Disposition selon la revendication 2, caractérisée en ce que les galets de guidage (2b) des contenants de stockage (3) sont disposés sensiblement au centre sur leurs côtés sur des goujons (4) reliés avec la chaîne d'entraînement (6).
